# EUROPEAN PATENT SPECIFICATION

(11) **EP 4 548 174 B1**
(45) Date of publication and mention of the grant of the patent: **04.11.2026**
(21) Application number: 24826422.8
(22) Date of filing: 13.05.2024
(51) Int. Cl.: G06F 1/16, G06F 1/18, E05C 17/56, E05C 19/16, H04M 1/02

(54) **COMPUTER CHASSIS FACEPLATE SYSTEM**
FRONTPLATTENSYSTEM FÜR EIN COMPUTERGEHÄUSE
SYSTÈME DE PLAQUE FRONTALE DE CHÂSSIS D'ORDINATEUR

(30) Priority: 19.06.2023 US 202318337117
(43) Date of publication of application: 07.05.2025
(73) Proprietor: Maingear, Inc., Warren, NJ 07059 (US)
(72) Inventor: SANTOS, Wallace, Warren, NJ 07059 (US)
(74) Representative: Hernandez, Yorck
(86) International application number: PCT/US2024/029039
(87) International publication number: WO 2024/263296

(56) References cited:
- US-A1- 2011 266 278
- US-A1- 2013 314 856
- US-A1- 2016 135 312
- US-A1- 2017 344 076
- US-A1- 2019 212 791
- US-A1- 2020 333 856
- US-A1- 2020 371 560

## Description

### FIELD OF THE DISCLOSED TECHNOLOGY

The disclosed technology relates generally to computer faceplates, and more specifically to a system of removably attaching one or more faceplates to a computer chassis.

### BACKGROUND OF THE DISCLOSED TECHNOLOGY

As computers have become more ubiquitous in daily life, there has arisen both a greater need and a greater desire for customizability in computer hardware. This greater customizability would allow for easier identification of one's personal computer device, and would promote greater user investment in, care for, and enjoyment of using one's own computer device. However, computer hardware is difficult and expensive to custom-make or custom-order, so users must generally resort to prefabricated and uncustomized hardware. There is therefore a need for a system of computer hardware that is relatively easy to customize without requiring significant fabrication of unique hardware pieces.

Documents US 2016/0135312 A1, US 2020/0333856 A1, US 2020/0371560 A1 and US 2017/0344076 A1 represent background art in the field of housings and attachable covers or panels for electronic devices and computer chassis. None of these documents discloses the combination of features set out in the appended claims, in particular a plurality of corner-proximate flanges each carrying a magnet or magnetizable material that cooperate with correspondingly positioned, magnet-equipped securing portals in a front side of a computer chassis.

### SUMMARY OF THE DISCLOSED TECHNOLOGY

The invention is as set out in independent claims 1, 10 and 12, preferred forms being set out in dependent clams 2 to 9, 11, 13 and 14. In the following description, although numerous features may be designated as optional, it is nevertheless acknowledged that all features defined by the independent claims are not to be read as optional.

An interchangeable faceplate system for a computer chassis comprises a plurality of interchangeable faceplates, each with different indicia on a front side thereof. Each faceplate has a back side opposite its front side, with a plurality of flanges extending outwards from the back side. Each flange is closer to a corner of the back side than any of the other flanges of the plurality of flanges on the back side of the faceplate. Each flange has a magnet or a magnetizable material on the end extending away from the faceplate. A computer chassis is defined as a frame, substantially in a shape of a rectangular prism, which houses internal components of a computer, such as one or more motherboards, power supplies and hard drives.

The system further comprises a plurality of portals extending inward from a front side of the computer chassis, the front side of the computer chassis corresponding to the back sides of each of the faceplates. Each of the portals is closer to a corner of the front side of the computer chassis than to any of the other portals, and distances between the portals of the plurality of portals correspond to distances between the flanges of the plurality of flanges. Each portal has a securing mechanism therein, securing the front side of the computer chassis to a rest of the computer chassis. Each of the securing mechanisms are a magnet or a magnetizable material and each portal corresponds to one of the plurality of flanges. At least one corresponding pair of magnetic poles are in each corresponding pair of portals and flanges.

At least one of the securing mechanisms is simultaneously magnetically connected to at least one of the flanges and a removably connected separate front part of the chassis. The at least one securing mechanism may be a magnetizable fastener.

In embodiments, an edge of each of the multiple interchangeable faceplates which is between the front and back sides of the faceplate is tapered.

There is, in some embodiments, a first electrical connector on the front side of the chassis and a second electrical connector on at least one of the plurality of faceplates which are electrically connected when the faceplate(s) is/are magnetically connected to the front side of the chasses by way of a magnetic force between the plurality of securing mechanisms and the plurality of flanges. In some embodiments, the second electrical connector is electrically connected to at least one light on an edge of the at least one faceplate.

The at least one light, in embodiments, is at least one light on each of a top, bottom, left, and right side of the edge of the at least one faceplate. The at least one light may be attached to an edge or back side of the faceplate, and may emit light onto a portion of the front of the chassis that is visible from an outside thereof.

When one of the multiple interchangeable faceplates is magnetically attached to the chassis, in some embodiments, a portal is created between at least three sides of the faceplate and the chassis.

In some embodiments, at least one fan is fixedly attached to the chassis and is pointed in a direction such that, when activated, the fan blows air from inside the chassis towards one of the multiple interchangeable faceplates. The air may at least substantially exit through the portal between at least three sides of one of the multiple interchangeable faceplates and the chassis.

Described differently, a removably attachable faceplate system for a computer chassis comprises a faceplate with indicia on a front side thereof. The faceplate has a back side opposite the front side with a plurality of flanges extending outward therefrom. Each flange is closer to a corner of the back side than to any other of the flanges. Each flange has a magnet or magnetizable material on an end thereof farthest from the faceplate.

The computer chassis has a front side with a plurality of portals extending inward therefrom. The front side of the computer chassis corresponds to the back side of the faceplate. Each portal contains a securing mechanism adapted to secure the front side of the computer chassis to a rest of the chassis. Each securing mechanism is a magnet of a magnetizable material. Each portal, in embodiments, corresponds to one of the plurality of flanges, and at least one corresponding pair of magnetic poles is in each corresponding pair of portals and flanges.

The back side of the faceplate has an area which is smaller than that of the front side of the computer chassis.

When the faceplate is removably attached to the front side of the computer chassis, a distance from a center of the computer chassis to a plane in which a majority of the front side of the computer chassis lies is greater than a distance from a center of the computer chassis to a furthest-extended part of the faceplate.

The at least one securing mechanism is simultaneously magnetically connected to at least one of the flanges and a removably connected separate front part of the chassis. At least one of the securing mechanisms may be a magnetizable fastener.

An edge of the faceplate between the front and back sides thereof may be tapered, such that a majority of the edge has a linearly decreasing cross-sectional area between the front side and the back side of the faceplate.

When the faceplate is magnetically connected, by way of a magnetic force between the plurality of securing mechanisms and the plurality of flanges, to the front side of said chassis, a first electrical connector on the front side of the chassis and a second electrical connector on the faceplate are electrically connected. The second electrical connector may be electrically connected to at least one light on an edge of the faceplate, which may be at least one light on each of a top, bottom, left, and right side of the edge of the faceplate.

When the faceplate is magnetically attached to the chassis, in various embodiments, a portal is created between at least three sides of the faceplate and the chassis.

At least one fan may be fixedly attached to the chassis and be pointed in a direction such that, when activated, the fan blows air from inside the chassis towards the faceplate. The air may at least substantially exit through the portal between the at least three sides of the faceplate and the chassis.

Described yet another way, a faceplate of embodiments of the disclosed technology has a front side and a back side, the back side being opposite the front side, with an edge there-between. The front side has indicia thereon, and the back side has a plurality of flanges extending there-from. The back side is similar to and smaller in area than the front side, and the front and back side have a same number of corners. The edge is tapered. The flanges are disposed substantially at the corners and extend from the back side in a direction opposite the front side, and each flange includes a magnet or magnetizable material. The faceplate is adapted to removably connect to a computer at magnetizable portals thereof, with each portal corresponding to one of the flanges.

A "faceplate" is defined as a sheet of rigid material, a majority thereof extending in a single plane, adapted to attach to a front side of a computer chassis. "Interchangeable" is defined as having a substantially similar shape and/or being adapted to be removably attachable to one or more other objects in a same way as others of said interchangeable objects. A "magnet" is defined as a material having a composition which exhibits magnetic characteristics, including attraction to other such materials. A "securing mechanism" is defined as a mechanism for connecting a first and a second object such that said objects substantially remain rigid with respect to each other barring external forces substantially greater than a normal force on one or both of said objects and/or a force due to gravity. A "magnetic pole" is defined as a region of a magnet toward which or from which magnetic forces are directed, designated by one of terms "North" and "South", each northern pole being attracted to/corresponding to at least one southern pole and vice versa. "Similar to" is defined as having congruent angles and an equal ratio of lengths of corresponding sides. "Being tapered" is defined as having a majority of an edge with a decreasing cross-sectional area extending between the front side and the back side on each of the interchangeable faceplates and/or on a faceplate.

Any device or step to a method described in this disclosure can comprise or consist of that which it is a part of, or the parts which make up the device or step. The term "and/or" is inclusive of the items which it joins linguistically and each item by itself.

### BRIEF DESCRIPTION OF THE DRAWINGS

Figure 1 shows a top and front perspective view of a separated faceplate and front side of a computer chassis of embodiments of the disclosed technology.
Figure 2 shows a bottom and rear perspective view of the separated faceplate and front side of a computer chassis of figure 1.
Figure 3 shows a top and front perspective view of a front side of a computer chassis of embodiments of the disclosed technology.
Figure 4 shows a rear perspective view of a faceplate of embodiments of the disclosed technology.
Figure 5 shows a top and front perspective view of a combined faceplate and front side of a computer chassis of embodiments of the disclosed technology.
Figure 6 shows a closeup portion of a rear perspective view of the faceplate of figure 4.
Figure 7 shows a closeup portion of a top and front perspective view of the front side of a computer chassis of figure 3.
Figure 8 shows an exploded top and front perspective view of the faceplate of figure 4.
Figure 9 shows an exploded bottom and rear perspective view of the faceplate of figure 4.
Figure 10 shows a front and left exploded perspective view of the combined faceplate and front side of a computer chassis of figure 5.
Figure 11 shows a back and left exploded perspective view of the combined faceplate and front side of a computer chassis of figure 5.

### DETAILED DESCRIPTION OF EMBODIMENTS OF THE DISCLOSED TECHNOLOGY

A computer chassis faceplate system of embodiments of the disclosed technology includes one or more computer faceplates that are removably attachable to a front side of a computer chassis. The faceplates have a front side, with indicia thereon, and an opposite back side. A plurality of flanges containing magnets and/or magnetizable material extend from the back side. The front side of the computer chassis has portals in locations matching those of the flanges, each containing a magnetic or magnetizable securing mechanism. Each corresponding pair of magnets in each pair of flange and portal is magnetically attracted to each other.

Embodiments of the disclosed technology will become more clear in view of the following discussion of the figures.

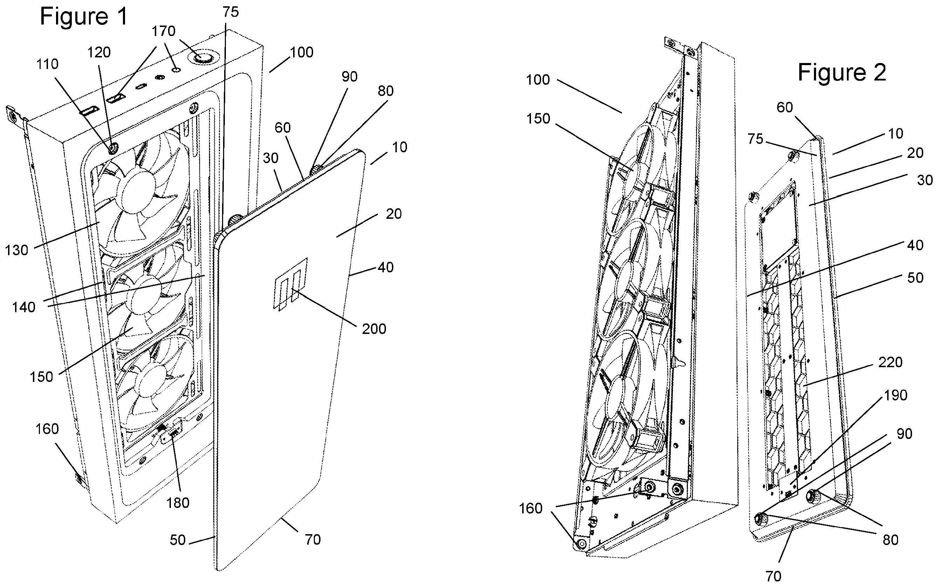

Figure 1 shows a top and front perspective view of a separated faceplate and front side of a computer chassis of embodiments of the disclosed technology. Figure 2 shows a bottom and rear perspective view of the separated faceplate and front side of a computer chassis of figure 1. The faceplate 10 has a front side 20 and an opposite back side 30, with a tapered edge 75 there-between. The back side 30 has a plurality of flanges 80 extending outwardly in a direction opposite the front side 20. Each flange 80 has a magnet or magnetizable material 90. The magnet or magnetizable material 90 may be removably attached or embedded within the flange 80 or may in other way be fixedly or removably attached to the flange 80. In some embodiments, a portion, a majority, or an entirety of one or more of the flanges 80 may be made of or simultaneously be the magnet or magnetizable material 90.

In the embodiment shown, the faceplate 10 has four flanges 80, and the flanges 80 are positioned at or near corners of the back panel 30. In other embodiments, the faceplate 10 may have any number of flanges 80, which may be positioned in any arrangement or at any location on the back side 30, or the edge 75, of the faceplate 10.

The front side 20 of the faceplate 10 has indicia 200 thereon. There may be a plurality of faceplates 10 which are removably attachable to the front side of the computer chassis 100. Each individual faceplate 10 may vary in the indica 200 on front sides 20 thereof. Each may further vary in indicia on the tapered edge 75 and/or the back side 30 thereof. All elements of each faceplate 10 may further vary in color or colors thereof, designs thereof, materials thereof, opacity thereof, embossments thereof, engravings thereof, and/or in any other cosmetic way. In some embodiments, some or more faceplates 10 vary in shape thereof or cutouts thereof.

The front side of the computer chassis 100 contains portals 110 containing magnetic or magnetizable fasteners 120. Each fastener 120 may be adapted to hold together two or more elements of the front side of the computer chassis 100. In the embodiment shown, each portal 110 is positioned to correspond to one of the flanges 80. In some embodiments, one or more of the faceplates 10 may have a varying number of flanges 80, though none more than a number of portals 110 in the front side of the computer chassis 100.

The front sides of the computer chassis 100 and the back side 30 of the faceplate(s) 10 include electronic coupling pieces 180, 190 respectively at corresponding locations, such that when the faceplate 10 is removably attached to the front side of the computer chassis 100 by way of the magnetic force between the magnets 90 and the magnetic fasteners 120 in the flanges 80 and the portals 110, respectively. In some embodiments, each of the electronic coupling pieces 180, 190 may be at any location thereof and/or may have multiple coupling pieces 180 or 190. In some embodiments, the coupling pieces 180, 190 may be located, respectively, in one or more of the portals 110 and/or the flanges 180. One or more faceplates 10 may have a same number of coupling pieces 190, more coupling pieces 190, or fewer coupling pieces 190 as the front side of the computer chassis 100 has coupling pieces 180.

Each faceplate 10 has an upper edge 60, a lower edge 70, a right edge 40, and a left edge 50. One or more faceplates 10 may be arranged such that it may removably connect to the front side of the computer chassis 100 by way of the flanges 80 and the portals 100 when the upper edge 60 is arranged above the lower edge 70 or when the lower edge 70 is arranged above the upper edge 60. "Upper" and "lower" are defined with respect to a surface on which the front side of the computer chassis 100 is placed.

The front side of the computer chassis 100, in the embodiment shown, is removably attachable to a rest of a computer chassis by way of attachment pieces 160. In embodiments, the front side of the computer chassis 100 may be fixedly attached to the rest of the computer chassis, such that it may only be removed from the rest of the computer chassis by deforming it. The front side of the computer chassis 100, in the embodiment shown, includes a plurality of ports and buttons 170 on a top side thereof. The plurality of ports and buttons 170 may be usable only when the front side of the computer chassis 100 is connected to the rest of the computer chassis by way of the attachment pieces 160, and some or all of them may be usable whether or not the faceplate 10 is attached to the front side of the computer chassis 100.

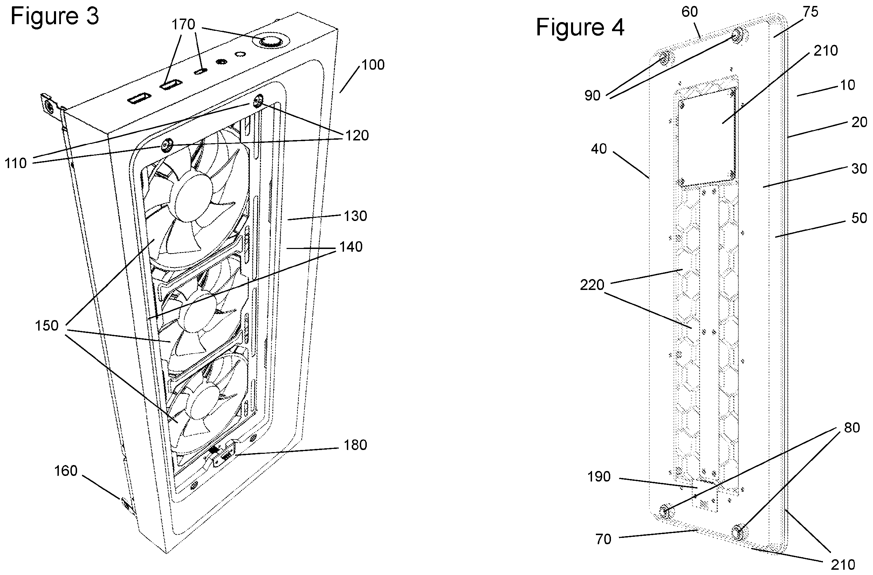

Figure 3 shows a top and front perspective view of a front side of a computer chassis of embodiments of the disclosed technology. The front side of the chassis 100 includes a larger portal 130 that is sized to receive some or all of the faceplate 10. The portal 130 has edges 140. In the embodiment shown, all of the edges 140 are tapered, but in other embodiments some or none of them may be untapered, or tapered in was unlike others of the edges 140.

The front side of the chassis 100, in the embodiment shown, includes a plurality of fans 150. The fans 150 are positioned to blow air, when activated, from an inside of the computer chassis toward the portal 130. In the embodiment shown, the fans 150 are of a same size, and are linearly arranged vertically, with respect to a surface on which the computer chassis rests. In other embodiments the fans 150 may be of any size or shape, and may be arranged in any location, so long as they are arranged to blow air, when activated, from the inside of the computer chassis toward the portal 130.

Figure 4 shows a rear perspective view of a faceplate of embodiments of the disclosed technology. In the embodiment shown, the back side 30 of the faceplate 10 includes a plurality of areas of varying thickness 220. In further embodiments, the faceplate 10 may have areas throughout of varying thickness based on considerations including, but not limited to, cosmetic design, weight, materials used, construction/production/assembly methods, internal air circulation and/or temperature regulation, and customizability.

In the embodiment shown, the edges 75 of the faceplate 10 are tapered at a substantially same angle throughout and with rounded corners. In various embodiments, the edges 75 of the faceplate 10 may include non-tapered portions and/or may include multiple tapered portions with varying tapered angles.

In the embodiment shown, each faceplate 10 shown has four flanges 80, each closer to a corner thereof than to any other flange. In various other embodiments, one or more of the faceplates 10 may have more or fewer flanges 80 than others of the faceplates 10, so long as no faceplate 10 has a number of flanges 80 that exceed a number of portals 110 on the front side of the computer chassis 100.

In the embodiment shown, the electronic coupling 180 on the front side of the computer chassis 100 is in a form of a male connector, and the electronic coupling 190 on the back side 30 of the faceplate 10 is in a form of a female connector, such that they may mate to form a portion of a circuit. In some embodiments, each of the electronic coupling or couplings 180 on the front side of the computer chassis 100 and each of the electronic coupling or couplings 190 on the back side 30 of the faceplate 10 may be in the form of either a male or female connector, or any other form of connector, such that each corresponding connector of each pair is matable with the other corresponding connector to form a portion of a circuit.

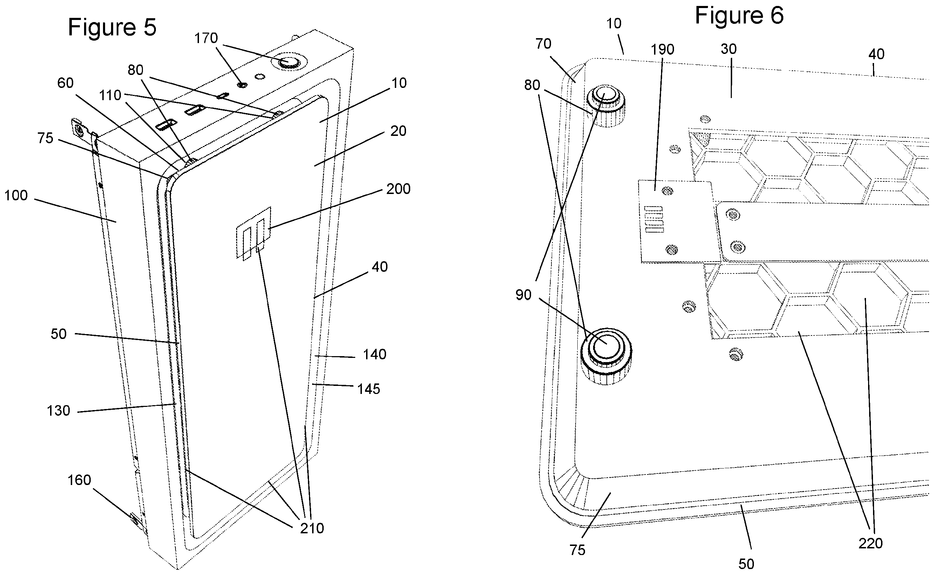

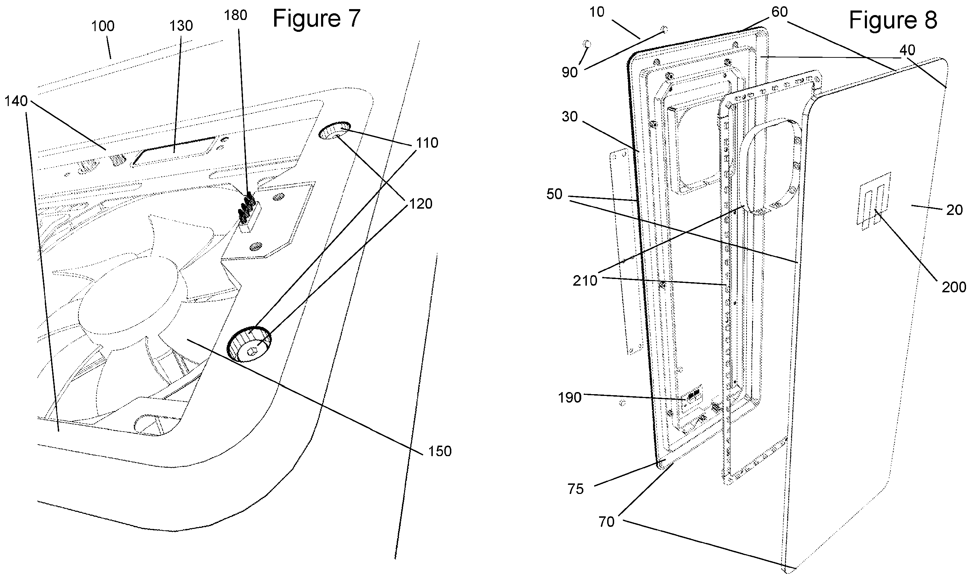

Figure 5 shows a top and front perspective view of a combined faceplate and front side of a computer chassis of embodiments of the disclosed technology. Figure 6 shows a closeup portion of a rear perspective view of the faceplate of figure 4. Figure 7 shows a closeup portion of a top and front perspective view of the front side of a computer chassis of figure 3. In the embodiment shown, when the faceplate 10 is connected to the front side of the computer chassis 100, a gap 145 exists between the front side of the computer chassis 100 and each of the four sides 40, 50, 60, 70 of the faceplate 10. In some embodiments, at least a portion of the gap 145 between one or more of the sides 40, 50, 60, 70 of the faceplate 10 may extend to the larger internal portal 130. In further embodiments, one or more of the sides 40, 50, 60, 70 of the faceplate 10 may be blocked, such that the respective edge of the faceplate 10 extends to substantially touch or be flush with the edge 140 of the larger portal 130. In further embodiments, when the faceplate 10 is connected to the front side of the chassis 100 by way of the flanges 80 and the portals 110, one or more of the edges 40, 50, 60, 70 of the faceplate 10 may be substantially unblocked but for one or more of a flange 80 and an electronic coupling 180, 190.

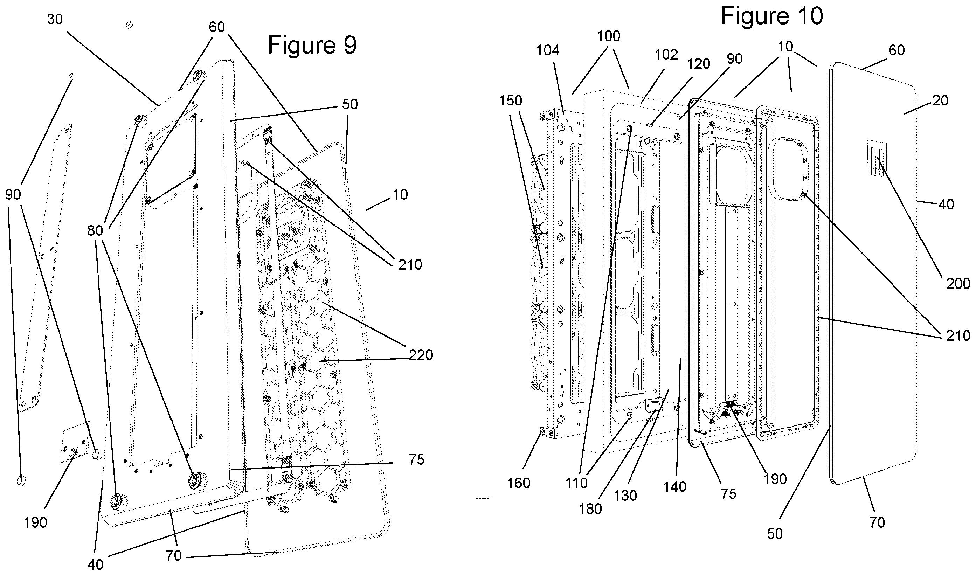

Figure 8 shows an exploded top and front perspective view of the faceplate of figure 4. Figure 9 shows an exploded bottom and rear perspective view of the faceplate of figure 4. In the embodiment shown, the faceplate 10 includes a loop of lights 210 substantially at edges thereof, and a loop of lights 210 at a location corresponding to indicia 200 on the front side 20 of the faceplate 10. In other embodiments, these lights 210 may be at other locations within the faceplate 10. Some or more of these lights 210 may be of varying colors and/or brightness and/or may be variable in their colors and/or brightness.

In this embodiment, all of the lights 210 are powered by a single connection between the connector 190 on the front side of the computer chassis 100 and the connector 180 on the back side 30 of the faceplate 10. In other embodiments, connections may exist between multiple connectors 190 on the front side of the computer chassis 100 and multiple connectors 180 on the back side 30 of the faceplate 10, each connection being connected by at least one circuit to one or more portions of the lights 210 in the faceplate 10.

In the embodiment shown, the faceplate 10 includes multiple parts with the lights 210 placed therebetween. In some embodiments, the various parts of the faceplate 10 are removably attachable and/or various sets of lights 210 may be removably inserted therein.

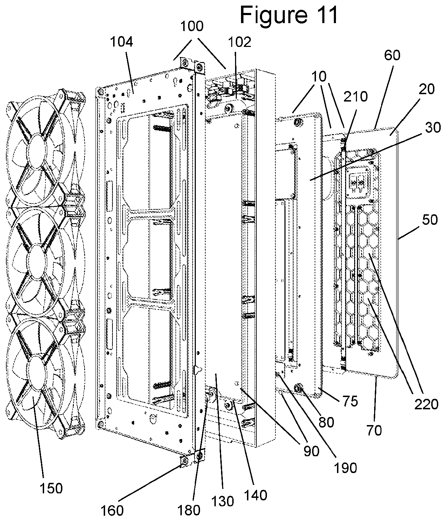

Figure 10 shows a front and left exploded perspective view of the combined faceplate and front side of a computer chassis of figure 5. Figure 11 shows a back and left exploded perspective view of the combined faceplate and front side of a computer chassis of figure 5. In the embodiment shown, the front side of the computer chassis 100 includes multiple parts, including a set of fans 150, an internal component 104, and an external component 102. One or more of these components may be removably attachable by way of the magnetized securing mechanisms 120. In other embodiments, one or more of these components may be removably attachable, or may be fixedly connected to each other such that they are substantially unremovable from each other unless by way of being irreversibly deformed, by way of other securing mechanisms, and the magnetic components 120 in the portals 110 may be components other than securing mechanisms.

For purposes of this disclosure, the term "substantially" is defined as "between 95% and 100% of" the term which it modifies.

Any device or aspect of the technology can "comprise" or "consist of" the item it modifies, whether explicitly written as such or otherwise.

When the term "or" is used, it creates a group which has within either term being connected by the conjunction as well as both terms being connected by the conjunction.

The described embodiments are to be considered in all respects only as illustrative and not restrictive.

## Claims

1. An interchangeable faceplate system for a computer chassis, comprising:
a plurality of interchangeable faceplates (10) each with different indicia (200) on a front side (20) thereof;
a plurality of flanges (80) extending outward from a back side (30) of each of said faceplates (10), said back side (30) being opposite said front side (20), each of said plurality of flanges (80) closer to a corner of said back side (30) than any other flange of said plurality of flanges (80);
a magnet or magnetizable material (90) on an end of each flange (80) of said plurality of flanges (80);
a plurality of portals (110) extending inward from a front side of said computer chassis (100), said front side of said computer chassis (100) corresponding to said back side (30) of each of said faceplates (10), each of said plurality of portals (110) closer to a corner of said front side of said computer chassis (100) than any other portal of said plurality of portals (110), distances of said plurality of portals (110) to each other corresponding to distances of said plurality of flanges (80) to each other;
a securing mechanism (120) in each of said plurality of portals (110) securing said front side of said computer chassis (100) to a rest of said computer chassis;
wherein each of said securing mechanisms (120) comprises a magnet or a magnetizable material;
wherein each portal of said plurality of portals (110) corresponds to one of said plurality of flanges (80) and at least one corresponding pair of magnetic poles is in each said corresponding pair of portals (110) and flanges (80) thereof.

2. The faceplate system of claim 1, wherein at least one said securing mechanism (120) is simultaneously magnetically connected to at least one of said flanges (80) and a removably connected separate front part of said chassis.

3. The faceplate system of claim 2, wherein said at least one said securing mechanism (120) is a magnetizable fastener.

4. The faceplate system of claim 1, wherein an edge (75) of each of said multiple interchangeable faceplates (10), said edge (75) being between said front side (20) and said back side (30) of each of said faceplates (10), is tapered.

5. The faceplate system of claim 1, wherein a first electrical connector (180) on said front side of said chassis (100) and a second electrical connector (190) on at least one of said plurality of faceplates (10) are electrically connected when said one of said plurality of faceplates (10) is magnetically connected, by way of a magnetic force between said plurality of securing mechanisms (120) and said plurality of flanges (80), to said front side of said chassis (100).

6. The faceplate system of claim 5, wherein said second electrical connector (190) is electrically connected to at least one light (210) on an edge of said at least one of said plurality of faceplates (10).

7. The faceplate system of claim 6, wherein said at least one light (210) comprises at least one light on each of a top, bottom, left, and right side of said edge of said one of said plurality of faceplates (10); and wherein said at least one light (210) is attached to an edge or back side (30) of said faceplate (10) and is arranged to emit light onto a portion of said front of said chassis (100) visible from an outside thereof.

8. The faceplate system of claim 4, wherein one of said multiple interchangeable faceplates (10) is magnetically attached to said chassis; and a larger portal (130) is created between at least three sides of said one of said multiple interchangeable faceplates (10) and said chassis.

9. The faceplate system of claim 8, wherein at least one fan (150) is fixedly attached to said chassis and is pointed in a direction such that said fan (150), when activated, blows air from inside said chassis towards said one of said multiple interchangeable faceplates (10), said air exiting through said larger portal (130) between said at least three sides of said one of said multiple interchangeable faceplates (10) and said chassis.

10. A removably attachable faceplate system for a computer chassis, comprising:
a faceplate (10) with indicia (200) on a front side (20) thereof;
a plurality of flanges (80) extending outward from a back side (30) of said faceplate (10), said back side (30) being opposite said front side (20), each of said plurality of flanges (80) closer to a corner of said back side (30) than any other flange of said plurality of flanges (80);
a magnet or magnetizable material (90) on an end of each flange (80) of said plurality of flanges (80);
a plurality of portals (110) extending inward from a front side of said computer chassis (100), said front side of said computer chassis (100) corresponding to said back side (30) of said faceplate (10);
a securing mechanism (120) in each of said plurality of portals (110) adapted to secure said front side of said computer chassis (100) to a rest of said computer chassis;
wherein each of said securing mechanisms (120) comprises a magnet or a magnetizable material;
wherein each portal of said plurality of portals (110) corresponds to one of said plurality of flanges (80) and at least one corresponding pair of magnetic poles is in each said corresponding pair of portals (110) and said flanges (80) thereof;
wherein an area of said back side (30) of said faceplate (10) is smaller than an area of said front side of said computer chassis (100);
wherein said faceplate (10) is removably attached to said front side of said computer chassis (100);
wherein a distance from a center of said computer chassis to a plane in which a majority of said front side of said computer chassis (100) lies is greater than a distance from a center of said computer chassis to a furthest-extended part of said faceplate (10); and
wherein at least one said securing mechanism (120) is simultaneously magnetically connected to at least one of said flanges (80) and a removably connected separate front part of said chassis.

11. The faceplate system of claim 10, wherein said at least one said securing mechanism (120) is a magnetizable fastener.

12. A removably attachable faceplate system for a computer chassis, comprising:
a faceplate (10) with indicia (200) on a front side (20) thereof;
a plurality of flanges (80) extending outward from a back side (30) of said faceplate (10), said back side (30) being opposite said front side (20), each of said plurality of flanges (80) closer to a corner of said back side (30) than any other flange of said plurality of flanges (80);
a magnet or magnetizable material (90) on an end of each flange (80) of said plurality of flanges (80);
a plurality of portals (110) extending inward from a front side of said computer chassis (100), said front side of said computer chassis (100) corresponding to said back side (30) of said faceplate (10);
a securing mechanism (120) in each of said plurality of portals (110) adapted to secure said front side of said computer chassis (100) to a rest of said computer chassis;
wherein each of said securing mechanisms (120) comprises a magnet or a magnetizable material;
wherein each portal of said plurality of portals (110) corresponds to one of said plurality of flanges (80) and at least one corresponding pair of magnetic poles is in each said corresponding pair of portals (110) and said flanges (80) thereof; and
wherein a first electrical connector (180) on said front side of said chassis (100) and a second electrical connector (190) on said faceplate (10) are electrically connected when said faceplate (10) is magnetically connected, by way of a magnetic force between said plurality of securing mechanisms (120) and said plurality of flanges (80), to said front side of said chassis (100).

13. The faceplate system of claim 12, wherein said second electrical connector (190) is electrically connected to at least one light (210) on an edge of said faceplate (10).

14. The faceplate system of claim 13, wherein said at least one light (210) comprises at least one light on each of a top, bottom, left, and right side of said edge of said faceplate (10).

## Patentansprüche

1. Austauschbares Frontplattensystem für ein Computergehäuse, umfassend:
eine Vielzahl von austauschbaren Frontplatten (10), jeweils mit unterschiedlichen Zeichen (200) auf einer Vorderseite (20) davon;
eine Vielzahl von Flanschen (80), die sich von einer Rückseite (30) jeder der Frontplatten (10) nach außen erstreckt, wobei die Rückseite (30) der Vorderseite (20) gegenüberliegt, jeder der Vielzahl von Flanschen (80) näher an einer Ecke der Rückseite (30) liegt als jeder andere Flansch der Vielzahl von Flanschen (80);
einen Magneten oder magnetisierbares Material (90) an einem Ende jedes Flansches (80) der Vielzahl von Flanschen (80);
eine Vielzahl von Eingängen (110), die sich von einer Vorderseite des Computergehäuses (100) nach innen erstreckt, wobei die Vorderseite des Computergehäuses (100) der Rückseite (30) jeder der Frontplatten (10) entspricht, jeder aus der Vielzahl von Eingängen (110) näher an einer Ecke der Vorderseite des Computergehäuses (100) ist als jeder andere Eingang aus der Vielzahl von Eingängen (110), wobei Abstände der Vielzahl von Eingängen (110) zueinander Abständen der Vielzahl von Flanschen (80) zueinander entsprechen;
einen Sicherungsmechanismus (120) in jedem der Vielzahl von Eingängen (110), der die Vorderseite des Computergehäuses (100) an einem Rest des Computergehäuses sichert;
wobei jeder der Sicherungsmechanismen (120) einen Magneten oder ein magnetisierbares Material umfasst;
wobei jeder Eingang aus der Vielzahl von Eingängen (110) einem aus der Vielzahl von Flanschen (80) entspricht und mindestens ein entsprechendes Paar von magnetischen Polen in jedem des entsprechenden Paares von Eingängen (110) und Flanschen (80) davon ist.

2. Frontplattensystem nach Anspruch 1, wobei mindestens ein Sicherungsmechanismus (120) gleichzeitig magnetisch mit mindestens einem der Flansche (80) und einem entfernbar verbundenen separaten Vorderteil des Gehäuses verbunden ist.

3. Frontplattensystem nach Anspruch 2, wobei der mindestens eine Sicherungsmechanismus (120) ein magnetisierbares Befestigungselement ist.

4. Frontplattensystem nach Anspruch 1, wobei eine Kante (75) jeder der mehreren austauschbaren Frontplatten (10), wobei die Kante (75) zwischen der Vorderseite (20) und der Rückseite (30) jeder der Frontplatten (10) ist, abgeschrägt ist.

5. Frontplattensystem nach Anspruch 1, wobei ein erster elektrischer Verbinder (180) an der Vorderseite des Gehäuses (100) und ein zweiter elektrischer Verbinder (190) an mindestens einer aus der Vielzahl von Frontplatten (10) elektrisch verbunden sind, wenn die eine aus der Vielzahl von Frontplatten (10) über eine magnetische Kraft zwischen der Vielzahl von Sicherungsmechanismen (120) und der Vielzahl von Flanschen (80) mit der Vorderseite des Gehäuses (100) magnetisch verbunden ist.

6. Frontplattensystem nach Anspruch 5, wobei der zweite elektrische Verbinder (190) elektrisch mit mindestens einer Leuchte (210) an einer Kante der mindestens einen aus der Vielzahl von Frontplatten (10) verbunden ist.

7. Frontplattensystem nach Anspruch 6, wobei die mindestens eine Leuchte (210) mindestens eine Leuchte an jeder von einer oberen, unteren, linken und rechten Seite der Kante der einen aus der Vielzahl von Frontplatten (10) umfasst; und wobei die mindestens eine Leuchte (210) an einer Kante oder einer Rückseite (30) der Frontplatte (10) angebracht ist und so angeordnet ist, dass sie Licht auf einen Abschnitt der Vorderseite des Gehäuses (100) emittiert, das von einer Außenseite davon sichtbar ist.

8. Frontplattensystem nach Anspruch 4, wobei eine der mehreren austauschbaren Frontplatten (10) magnetisch an dem Gehäuse angebracht ist; und ein größerer Eingang (130) zwischen mindestens drei Seiten der einen der mehreren austauschbaren Frontplatten (10) und dem Gehäuse erzeugt ist.

9. Frontplattensystem nach Anspruch 8, wobei mindestens ein Lüfter (150) fest an dem Gehäuse angebracht ist und derart in eine Richtung gerichtet ist, dass der Lüfter (150), wenn er aktiviert ist, Luft aus einem Inneren des Gehäuses zu der einen der mehreren austauschbaren Frontplatten (10) hin bläst, wobei die Luft durch den größeren Eingang (130) zwischen den mindestens drei Seiten der einen der mehreren austauschbaren Frontplatten (10) und dem Gehäuse austritt.

10. Entfernbar anbringbares Frontplattensystem für ein Computergehäuse, umfassend:
eine Frontplatte (10) mit Zeichen (200) auf einer Vorderseite (20) davon;
eine Vielzahl von Flanschen (80), die sich von einer Rückseite (30) der Frontplatte (10) nach außen erstreckt, wobei die Rückseite (30) der Vorderseite (20) gegenüberliegt, jeder der Vielzahl von Flanschen (80) näher an einer Ecke der Rückseite (30) liegt als jeder andere Flansch der Vielzahl von Flanschen (80);
einen Magneten oder magnetisierbares Material (90) an einem Ende jedes Flansches (80) der Vielzahl von Flanschen (80);
eine Vielzahl von Eingängen (110), die sich von einer Vorderseite des Computergehäuses (100) nach innen erstreckt, wobei die Vorderseite des Computergehäuses (100) der Rückseite (30) der Frontplatte (10) entspricht;
einen Sicherungsmechanismus (120) in jedem der Vielzahl von Eingängen (110), der dazu ausgelegt ist, die Vorderseite des Computergehäuses (100) an einem Rest des Computergehäuses zu sichern;
wobei jeder der Sicherungsmechanismen (120) einen Magneten oder ein magnetisierbares Material umfasst;
wobei jeder Eingang aus der Vielzahl von Eingängen (110) einem aus der Vielzahl von Flanschen (80) entspricht und mindestens ein entsprechendes Paar von magnetischen Polen in jedem des entsprechenden Paares von Eingängen (110) und den Flanschen (80) davon ist;
wobei eine Fläche der Rückseite (30) der Frontplatte (10) kleiner als eine Fläche der Vorderseite des Computergehäuses (100) ist;
wobei die Frontplatte (10) entfernbar an der Vorderseite des Computergehäuses (100) angebracht ist;
wobei ein Abstand von einer Mitte des Computergehäuses zu einer Ebene, in der ein Großteil der Vorderseite des Computergehäuses (100) liegt, größer als ein Abstand von einer Mitte des Computergehäuses zu einem am weitesten erstreckten Teil der Frontplatte (10) ist; und
wobei mindestens ein Sicherungsmechanismus (120) gleichzeitig magnetisch mit mindestens einem der Flansche (80) und einem entfernbar verbundenen separaten Vorderteil des Gehäuses verbunden ist.

11. Frontplattensystem nach Anspruch 10, wobei der mindestens eine der Sicherungsmechanismen (120) ein magnetisierbares Befestigungselement ist.

12. Entfernbar anbringbares Frontplattensystem für ein Computergehäuse, umfassend:
eine Frontplatte (10) mit Zeichen (200) auf einer Vorderseite (20) davon;
eine Vielzahl von Flanschen (80), die sich von einer Rückseite (30) der Frontplatte (10) nach außen erstreckt, wobei die Rückseite (30) der Vorderseite (20) gegenüberliegt, jeder der Vielzahl von Flanschen (80) näher an einer Ecke der Rückseite (30) liegt als jeder andere Flansch der Vielzahl von Flanschen (80);
einen Magneten oder magnetisierbares Material (90) an einem Ende jedes Flansches (80) der Vielzahl von Flanschen (80);
eine Vielzahl von Eingängen (110), die sich von einer Vorderseite des Computergehäuses (100) nach innen erstreckt, wobei die Vorderseite des Computergehäuses (100) der Rückseite (30) der Frontplatte (10) entspricht;
einen Sicherungsmechanismus (120) in jedem der Vielzahl von Eingängen (110), der dazu ausgelegt ist, die Vorderseite des Computergehäuses (100) an einem Rest des Computergehäuses zu sichern;
wobei jeder der Sicherungsmechanismen (120) einen Magneten oder ein magnetisierbares Material umfasst;
wobei jeder Eingang aus der Vielzahl von Eingängen (110) einem aus der Vielzahl von Flanschen (80) entspricht und mindestens ein entsprechendes Paar von magnetischen Polen in jedem des entsprechenden Paares von Eingängen (110) und den Flanschen (80) davon ist; und
wobei ein erster elektrischer Verbinder (180) an der Vorderseite des Gehäuses (100) und ein zweiter elektrischer Verbinder (190) an der Frontplatte (10) elektrisch verbunden sind, wenn die Frontplatte (10) über eine magnetische Kraft zwischen der Vielzahl von Sicherungsmechanismen (120) und der Vielzahl von Flanschen (80) mit der Vorderseite des Gehäuses (100) magnetisch verbunden ist.

13. Frontplattensystem nach Anspruch 12, wobei der zweite elektrische Verbinder (190) elektrisch mit mindestens einer Leuchte (210) an einer Kante der Frontplatte (10) verbunden ist.

14. Frontplattensystem nach Anspruch 13, wobei die mindestens eine Leuchte (210) mindestens eine Leuchte an jeder von einer oberen, unteren, linken und rechten Seite der Kante der Frontplatte (10) umfasst.

## Revendications

1. Système de plaque frontale interchangeable pour un châssis d'ordinateur, comprenant :
une pluralité de plaques frontales interchangeables (10) chacune avec des indices différents (200) sur un côté avant (20) de celle-ci ;
une pluralité de brides (80) s'étendant vers l'extérieur à partir d'un côté arrière (30) de chacune desdites plaques frontales (10), ledit côté arrière (30) étant opposé audit côté avant (20), chacune de ladite pluralité de brides (80) étant plus proche d'un coin dudit côté arrière (30) que toute autre bride de ladite pluralité de brides (80) ;
un aimant ou un matériau magnétisable (90) sur une extrémité de chaque bride (80) de ladite pluralité de brides (80) ;
une pluralité de portails (110) s'étendant vers l'intérieur à partir d'un côté avant dudit châssis d'ordinateur (100), ledit côté avant dudit châssis d'ordinateur (100) correspondant audit côté arrière (30) de chacune desdites plaques frontales (10), chacun de ladite pluralité de portails (110) étant plus proche d'un coin dudit côté avant dudit châssis d'ordinateur (100) que tout autre portail de ladite pluralité de portails (110), les distances de ladite pluralité de portails (110) des uns aux autres correspondant aux distances de ladite pluralité de brides (80) des unes aux autres ;
un mécanisme de fixation (120) dans chacun de ladite pluralité de portails (110) fixant ledit côté avant dudit châssis d'ordinateur (100) à un reste dudit châssis d'ordinateur ;
chacun desdits mécanismes de fixation (120) comprenant un aimant ou un matériau magnétisable ;
chaque portail de ladite pluralité de portails (110) correspondant à l'une de ladite pluralité de brides (80) et au moins une paire correspondante de pôles magnétiques se trouvant dans chaque dite paire correspondante de portails (110) et de brides (80) de ceux-ci.

2. Système de plaque frontale de la revendication 1, au moins un mécanisme de fixation (120) étant simultanément connecté magnétiquement à au moins l'une desdites brides (80) et à une partie avant séparée connectée de manière amovible dudit châssis.

3. Système de plaque frontale de la revendication 2, ledit au moins un mécanisme de fixation (120) étant un élément de fixation magnétisable.

4. Système de plaque frontale de la revendication 1, un bord (75) de chacune desdites multiples plaques frontales interchangeables (10), ledit bord (75) étant entre ledit côté avant (20) et ledit côté arrière (30) de chacune desdites plaques frontales (10), étant conique.

5. Système de plaque frontale de la revendication 1, un premier connecteur électrique (180) sur ledit côté avant dudit châssis (100) et un second connecteur électrique (190) sur au moins l'une de ladite pluralité de plaques frontales (10) étant connectés électriquement lorsque ladite plaque frontale de ladite pluralité de plaques frontales (10) est connectée magnétiquement, au moyen d'une force magnétique entre ladite pluralité de mécanismes de fixation (120) et ladite pluralité de brides (80), audit côté avant dudit châssis (100).

6. Système de plaque frontale de la revendication 5, ledit second connecteur électrique (190) étant connecté électriquement à au moins une lumière (210) sur un bord de ladite au moins une plaque frontale de ladite pluralité de plaques frontales (10).

7. Système de plaque frontale de la revendication 6, ladite au moins une lumière (210) comprenant au moins une lumière sur chacun des côtés supérieur, inférieur, gauche et droit dudit bord de ladite une plaque de ladite pluralité de plaques frontales (10) ; et ladite au moins une lumière (210) étant attachée à un bord ou à un côté arrière (30) de ladite plaque frontale (10) et étant agencée pour émettre de la lumière sur une partie dudit avant dudit châssis (100) visible de l'extérieur de celui-ci.

8. Système de plaque frontale de la revendication 4, une plaque frontale parmi lesdites multiples plaques frontales interchangeables (10) étant fixée magnétiquement audit châssis ; et un portail plus grand (130) étant créé entre au moins trois côtés de ladite plaque frontale parmi lesdites multiples plaques frontales interchangeables (10) et ledit châssis.

9. Système de plaque frontale de la revendication 8, au moins un ventilateur (150) étant attachée de manière fixe audit châssis et étant dirigé dans une direction de sorte que ledit ventilateur (150), lorsqu'il est activé, souffle de l'air de l'intérieur dudit châssis vers ladite une plaque frontale parmi lesdites multiples plaques frontales interchangeables (10), ledit air sortant par ledit portail plus grand (130) entre lesdits au moins trois côtés de ladite une plaque frontale parmi lesdites multiples plaques frontales interchangeables (10) et ledit châssis.

10. Système de plaque frontale attachée de manière amovible pour un châssis d'ordinateur, comprenant :
une plaque frontale (10) avec des indices (200) sur un côté avant (20) de celle-ci ;
une pluralité de brides (80) s'étendant vers l'extérieur à partir d'un côté arrière (30) de ladite plaque frontale (10), ledit côté arrière (30) étant opposé audit côté avant (20), chacune de ladite pluralité de brides (80) étant plus proche d'un coin dudit côté arrière (30) que toute autre bride de ladite pluralité de brides (80) ;
un aimant ou un matériau magnétisable (90) sur une extrémité de chaque bride (80) de ladite pluralité de brides (80) ;
une pluralité de portails (110) s'étendant vers l'intérieur à partir d'un côté avant dudit châssis d'ordinateur (100), ledit côté avant dudit châssis d'ordinateur (100) correspondant audit côté arrière (30) de ladite plaque frontale (10) ;
un mécanisme de fixation (120) dans chacun de ladite pluralité de portails (110) adapté pour fixer ledit côté avant dudit châssis d'ordinateur (100) à un reste dudit châssis d'ordinateur ;
chacun desdits mécanismes de fixation (120) comprenant un aimant ou un matériau magnétisable ;
chaque portail de ladite pluralité de portails (110) correspondant à l'une de ladite pluralité de brides (80) et au moins une paire correspondante de pôles magnétiques se trouvant dans chaque dite paire correspondante de portails (110) et lesdites brides (80) de ceux-ci ;
une aire dudit côté arrière (30) de ladite plaque frontale (10) étant plus petite qu'une aire dudit côté avant dudit châssis d'ordinateur (100) ;
ladite plaque frontale (10) étant attachée de manière amovible audit côté avant dudit châssis d'ordinateur (100) ;
une distance d'un centre dudit châssis d'ordinateur à un plan dans lequel se trouve une majorité dudit côté avant dudit châssis d'ordinateur (100) étant supérieure à une distance d'un centre dudit châssis d'ordinateur à une partie la plus éloignée de ladite plaque frontale (10) ; et
au moins un mécanisme de fixation (120) étant simultanément connecté magnétiquement à au moins l'une desdites brides (80) et à une partie avant séparée connectée de manière amovible dudit châssis.

11. Système de plaque frontale de la revendication 10, ledit au moins un mécanisme de fixation (120) étant un élément de fixation magnétisable.

12. Système de plaque frontale attachée de manière amovible pour un châssis d'ordinateur, comprenant :
une plaque frontale (10) avec des indices (200) sur un côté avant (20) de celle-ci ;
une pluralité de brides (80) s'étendant vers l'extérieur à partir d'un côté arrière (30) de ladite plaque frontale (10), ledit côté arrière (30) étant opposé audit côté avant (20), chacune de ladite pluralité de brides (80) étant plus proche d'un coin dudit côté arrière (30) que toute autre bride de ladite pluralité de brides (80) ;
un aimant ou un matériau magnétisable (90) sur une extrémité de chaque bride (80) de ladite pluralité de brides (80) ;
une pluralité de portails (110) s'étendant vers l'intérieur à partir d'un côté avant dudit châssis d'ordinateur (100), ledit côté avant dudit châssis d'ordinateur (100) correspondant audit côté arrière (30) de ladite plaque frontale (10) ;
un mécanisme de fixation (120) dans chacun de ladite pluralité de portails (110) adapté pour fixer ledit côté avant dudit châssis d'ordinateur (100) à un reste dudit châssis d'ordinateur ;
chacun desdits mécanismes de fixation (120) comprenant un aimant ou un matériau magnétisable ;
chaque portail de ladite pluralité de portails (110) correspondant à l'une de ladite pluralité de brides (80) et au moins une paire correspondante de pôles magnétiques se trouvant dans chaque dite paire correspondante de portails (110) et lesdites brides (80) de ceux-ci ; et
un premier connecteur électrique (180) sur ledit côté avant dudit châssis (100) et un second connecteur électrique (190) sur ladite plaque frontale (10) étant connectés électriquement lorsque ladite plaque frontale (10) est connectée magnétiquement, au moyen d'une force magnétique entre ladite pluralité de mécanismes de fixation (120) et ladite pluralité de brides (80), audit côté avant dudit châssis (100).

13. Système de plaque frontale de la revendication 12, ledit second connecteur électrique (190) étant connecté électriquement à au moins une lumière (210) sur un bord de ladite plaque frontale (10).

14. Système de plaque frontale de la revendication 13, ladite au moins une lumière (210) comprenant au moins une lumière sur chacun des côtés supérieur, inférieur, gauche et droit dudit bord de ladite plaque frontale (10).
